# EUROPEAN PATENT APPLICATION

(11) **EP 2 073 489 A1**
(43) Date of publication of application: **24.06.2009**
(21) Application number: 07291591.1
(22) Date of filing: 21.12.2007
(51) Int. Cl.: H04L 29/06

(54) **Network personal content recorder**

(71) Applicant: Alcatel Lucent, 75008 Paris (FR)
(72) Inventor: Mobasser, Bahman, 78310 Maurepas (FR)
(74) Representative: D'Halleweyn, Nele Veerle Trees Gertrudis

(57) **Abstract**

The present invention relates to a network personal content recorder and method to store and subsequently access delivered content.

According to the present invention a network personal content recorder is provided that comprises a memory element, characterized in that said memory element is arranged to store a link to content on a first content server, said link enabling access to said content by a user at a later time.

The present invention further provides a method to to store digital multimedia content for later access. It comprises the storage of information about said content and is characterized in that said information comprises a link to said content, said link enabling access to said content.

## Description

The present invention relates to the field of user-interactive content delivery. More specifically, the present invention relates to a network personal content recorder and method to store and subsequently access delivered content.

The advent of high-speed communication technologies like ADSL has enabled new markets to arise. An example of such a market is Video-On-Demand (VOD), in which users can order specific video content. This is in sharp contrast with the broadcasting techniques used for traditional television, in which a large group of users was supplied with identical content at the same time. Intermediate technologies, like encrypted television signals, were used to enable a user to customize the channel package. Although only users having a decoder were able to view these channels, the video signal itself was distributed to every user.

With VOD services, content is only delivered to the user if it is demanded. The total amount of consumed bandwidth is less than traditional television because content is not distributed to every user.

Typically user-interactive services, like VOD, are combined with the traditional broadcasting of content. For instance, a user may want to watch a broadcasted soccer match and at a later time order a movie using VOD.

Because broadcasted content is time-limited, as it concerns content delivery to multiple users at the same time, video recorders can be used to record the content for later viewing. Current hard drive based records allow for a large amount of content to be stored. Presently, solutions exist in which the functionality of a set-top box and a video recorder are combined.

To add services for their customers, content providers are currently working on network personal video recorders (nPVRs). These recorders have essentially the same functionality as a regular video recorder but they are not located at the user location but are part of the network of the provider. nPVRs are user-specific in the sense that for each user a storage capacity is reserved. Even though compressing techniques are available to reduce the storage footprint of content, resources needed for this functionality are very large. With the implementation of high-definition content, the demand for storage capability will increase even further.

It is an object of the present invention, to provide the functionality of storing delivered content for later access, e.g. viewing, with reduced storage requirements.

This object is achieved with a network personal content recorder (NPCR) comprising a memory element which is arranged to store a link to content on a first content server, said link enabling access to said content. The content that is on the first content server may have a limited time in which it is available. Within the context of the present invention, content is available when it can be received by a user using known techniques such as IPTV multicast, IPTV unicast, DVB broadcasting, VOD, downloading or similar techniques. Storing a link to the content, instead of actual receiving and storing the content itself, enables a user to later receive or access the content, even if at that time the content on the server is unavailable to users who have no link to this content. Additionally or alternatively, the link may point to content that is unavailable at the time the link is created. If the user upgrades his subscription, or orders the content to which a link has been created, he is able to access this content at a later stage.

Because the content itself does not need to be stored on the recorder a significant reduction in the total amount of storage capacity can be achieved. Moreover, the deletion of 'stored' content simply involves the removal of the corresponding link.

An nPVR contains multimedia (voice and video) information and its placement in the network therefore implicates substantial traffic flows associated with the recording and playback of content. On the other hand, the NPCR according to the present invention does not need to contain any actual multimedia content and can be placed anywhere in the network, since the traffic associated with it is minimal.

Another benefit of the NPCR according to the present invention is related to the handling of advertisement content. Advertisers desire that recorded advertisement content should be modified and updated at the time of delivery. This is cumbersome with physical PVR and nPVRs, demanding real-time substitution of recorded advertisements by updated ones. With the NPCR according to the present invention, the usage of links allows a centralized updating possibility.

Popular programs are by definition the most likely programs to be recorded. At the time of delivery, known nPVRs have to each record these programs in order for their respective users to be able to watch them. The NPCR according to the present invention would reduce this peak network load. It should further be noted that in practice most stored programs are never watched.

The link that is stored on the NPCR contains information needed to access the content. This information could for instance comprise a file name or the name of a program. It could also comprise an HTML link to the content. Various other techniques are possible which are well known in the art and therefore do not need a word-by-word repetition.

Although targetted at placement within the network of the content provider, a similar recorder could be placed outside of the network, e.g. at the end-user. The skilled person in the art would appreciate that such a recorder would fall within the scope of the present invention.

In a preferred embodiment, the NPCR comprises extracting means to extract a link to said content from information about said content and requesting means to request the delivery of said content from a second content server in response to an access request from a user.

The extracting means are arranged to extract a link, e.g. file name, file location etc., from information about said content. The required information can for instance be embedded in the content itself. However, this information could also be separately available on the first content server. Additionally or alternatively, an electronic TV-guide could be used to extract the information.

Although the link can be used for the delivery of content, i.e. user-dedicated content delivery, it may also be used to initiate a second broadcast or multicast.

The first content server may comprise the second content server. More in particular, the first content server is the second content server. The distinction between first and second content server is related to the fact that after delivering specific content to users by the first content server, this content may be moved to a second content server, which has more of an archive functionality.

An important aspect of the link is that it contains enough information to receive or access the content it refers to. To this end, the network could comprise a catalog in which the location of the content is tracked. Assuming that the link comprises information regarding the name of a television show as well as the date and time at which the show was delivered, this catalog could link this information with for instance the location of the actual multimedia file corresponding to this television show. For the scope of the invention it is irrelevant where this catalog is implemented as it can be constructed with standard technologies.

The NPCR can be arranged to automatically store a link to content when it is available. Because the storage requirements are so low, the amount of programs that a user can access for later viewing does normally not depend on the storage capabilities of the NPCR but on the retention of the content on the respective content server. However, the NPCR can also be arranged to record a link to content in response to a storage request from a user. This request could involve several different moments. For instance, a user can ask the NPCR to record all the episodes of a particular series or all the programs in a certain category, e.g. comedies.

In addition to information about the location of the content, the link may also comprise user rights pertaining to the content the user wishes to record. An example of user rights are the rights a user has to watch certain programs or channels. Usually, channels are grouped in packages, e.g. sports package, film package. The rights of a user to watch channels or programs of a certain package can be part of the link. Additionally, the storage of a link may be done in correspondence with the user rights pertaining to this content. For instance, if a user is not allowed to watch a certain channel, because it is not part of user's subscription, a link to content available on this channel is not stored on the NPCR.

Alternatively, this link may be stored on the NPCR of a user although it is not available or accessible at that time. However, if the user wishes to change subscription this content may become available, depending on the conditions of the subscription.

Although during the description of the present invention examples are used relating to television programs, the content referred to in the present invention is not limited thereto. However, the invention is particularly useful for high bandwidth content like multimedia, e.g. videos, photos or music. Additionally or alternatively, the content may refer to IPTV.

The NPCR may comprise a user-specific database which comprises a listing of content available for later access. Typically, the NPCR is implemented on a single system, e.g. a computer server. The links stored on this server can be organized in several ways. One possibility is to have a database based on programs of which a link is stored in the database. An entry in this database could for instance comprise the name of the program and a list of users for which this link has been stored. However, the database can also be user-specific. In this case, the database for instance only contains the names of the programs that have been stored for this specific user.

One of the objects of the NPCR is to replace the functionality of a recorder at the user's premises. Ideally, the user should not worry whether the recorder is part of his home network or not. Therefore, the NPCR should provide a user interface which provides access to the links or database on the NPCR.

The present invention is also related to a method to store digital multimedia content for later access comprising the storage of information about said content. It is characterized in that said information comprises a link to said content, said link enabling access to said content. Again, storing a link instead of the actual content reduces the amount of necessary storage capacity. The link is preferably, but not necessarily, stored in a NPCR. It should be further noted, that the exact location of the content the link refers to is irrelevant as long as the link comprises information with which this content can be accessed. As mentioned above, the content may initially reside on a first content server but is moved or copied to a second server which has more of an archive functionality. It should be noted that other content, e.g. data files or programs, could be stored similarly.

To improve the efficiency, content to which a corresponding link has been stored should be flagged for conservation. This conservation can extend for a predetermined period. Content not flagged for conservation can be removed after delivery of this content. As a result, the amount of content stored in the network of the content provider can be optimized which results in longer retention times of the content compared to the situation in which all the content, flagged or not, is conserved.

The invention will be further described with reference to the accompanying drawings, in which:
Figure 1 is an example of a system with a known nPVR;
Figure 2 shows a system with a preferred embodiment of the NPCR according to the present invention;
Figure 3 shows a system with another embodiment of the present invention, incorporating distributed placement of NPCRs.

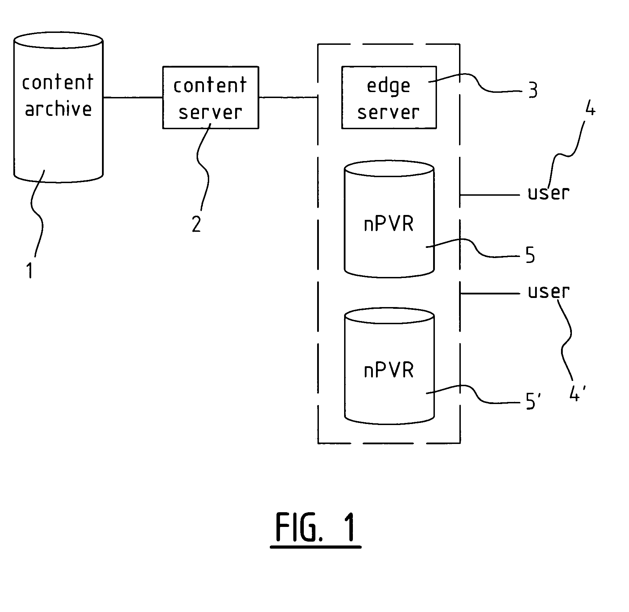

Figure 1 depicts a content delivery system comprising a content archive 1 on which content is stored. Part of this stored content is available for delivery, broadcasting or distribution using a content server 2. Although separated in this figure, the present invention does not exclude the possibility that the content server 2 and content archive 1 are merged. The content server 2 is connected by a network (not shown) to an edge server 3. This edge server 3 is connected to users 4 and 4', although it should be understood that more or less users can be connected. User rights information, for instance to which channel package a user is subscribed, may be incorporated in the edge server 3. If for instance, a television show is delivered by content server 2 on a channel to which only user 4 is subscribed, the edge server 3 will block the transfer of this channel to user 4'. It should be understood by the skilled person, that this functionality can be incorporated at different places in the network.

Edge server 3 is connected to two nPVRs 5 and 5', each corresponding to a different user. Users 4 and 4' may initiate a storage request for a particular television show. During delivery of this show by the content server 2, nPVRs 5 and 5' each store the television show on hard drives present in the nPVRs. Hence, after delivery two additional copies of the show are present in the network.

When users 5 and 5' wish to view the stored television show, it is distributed from the nPVRs to the respective users.

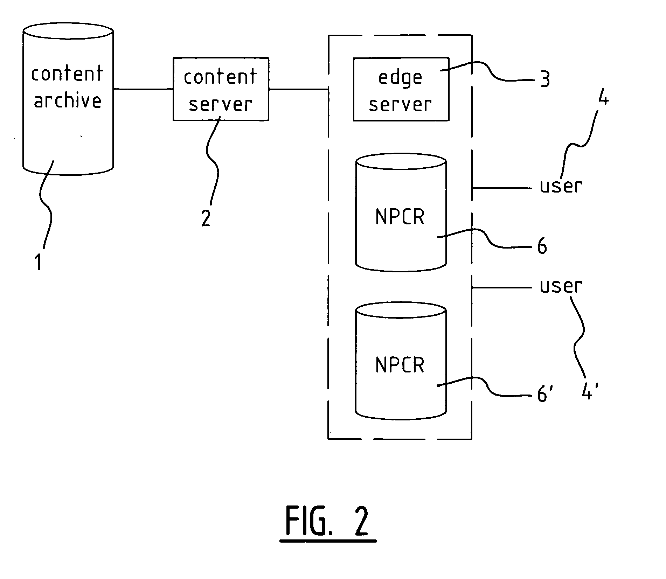

Figure 2 shows a system with a preferred embodiment of the NPCR according to the present invention. It much resembles the nPVR system of figure 1. However, the nPVRs 4, 4' are replaced by NPCRs 6, 6'. When a television show, for which a storage request has been made, is delivered in this system or is available in general, a link to the location of the show on the content server 2 is stored on the NPCRs 6, 6'. When users 4, 4' wish to watch the television show at a later time, the link information stored in the NPCRs 6, 6' is used to identify the location of the television show on the content server 2. A distribution request, based on and or incorporating the link, is sent to the content server 2. The content server 2 then delivers the television show to users 4 and 4'. Information regarding user rights may be part of the link that is stored on the NPCR. In that case, the NPCR can deny a viewing request because a user is not subscribed to the television show, or the channel on which this show has been delivered. However, if user rights information is stored on the edge server 3, this is not necessary. Assuming that content identity information, e.g. name of the television show, name of the channel etc., is distributed along with or embedded in the television show itself, the edge server can decide on which user is eligible to receive the television show. However, it might be useful to link user rights to content delivered are being available at a certain time, e.g. television show on December 4th. This enables the provider to give a user access to content that the user was previously not entitled to, for instance by means of changing the subscription. It should be understood by the skilled person that many more variations within the context of this invention are possible.

Apart from located near the edge server, the NPCRs can also be placed near the content server 2.

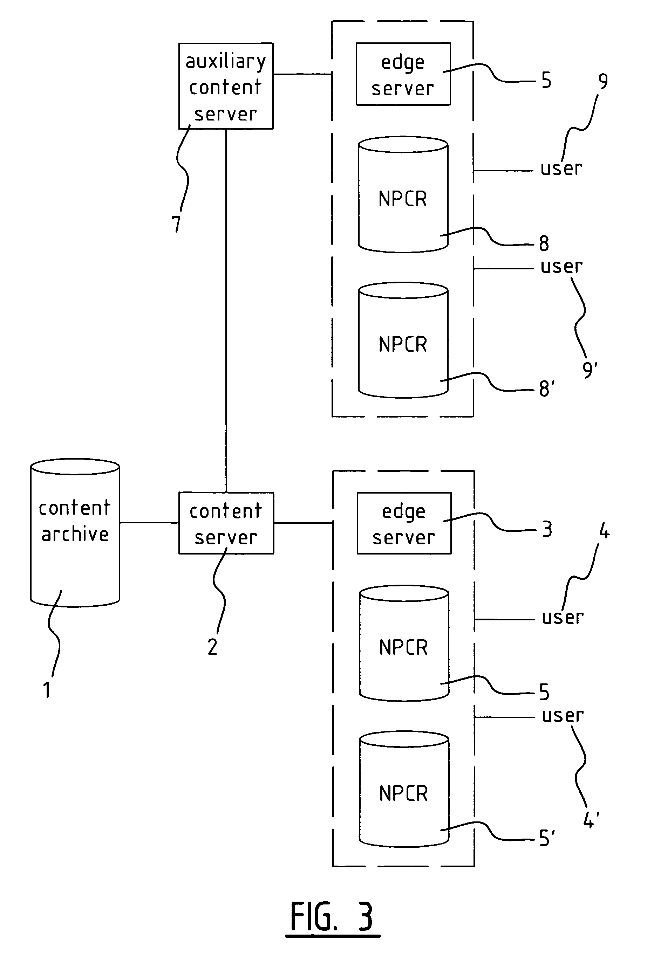

If many users simultaneously request content to which a link has been stored in the respective NPCRs, the load for content server 2 increases. If needed, local auxiliary content servers 7 can be set-up, see figure 3. These servers are again connected to an edge server 3 coupled to NPCRs 8, 8', and comprise all the content to which a corresponding link exists in the associated NPCRs 8, 8'. These servers provide the requested content to different users 9, 9'. In this way, the content server 2 is mostly used for delivery of content whereas the auxiliary servers 7 provide content that a user 9 wishes to access at a later time.

The present invention has been described in detail referring to specific embodiments thereof. However, the skilled person in the art may recognize that modifications, additions, or adjustments can be made without deviating from the scope of the present invention as defined by the following claims.

## Claims

1. Network personal content recorder comprising a memory element, **characterized in that** said memory element is arranged to store a link to content on a first content server, said link enabling access to said content.

2. Network personal content recorder according to claim 1, **characterized by**
extracting means to extract a link to said content from information about said content; and
requesting means to request the delivery of said content from a second content server in response to an access request from a user.

3. Network personal content recorder according to claim 2, **characterized in that** said first content server comprises said second content server.

4. Network personal content recorder according to claim 1, **characterized in that** said recorder is arranged to store said link in response to a storage request from a user.

5. Network personal content recorder according to claim 1, **characterized in that** said link comprises user rights of a user pertaining to said content.

6. Network personal content recorder according to claim 1, **characterized in that** said content comprises IPTV.

7. Network personal content recorder according to claim 1, **characterized in that** said memory comprises a user-specific database, said database comprising a listing of content available for later access.

8. Network personal content recorder according to claim 7, **characterized in that** said recorder comprises a user interface, said user interface providing access to said database.

9. A method to store digital multimedia content for later access comprising the storage of information about said content, **characterized in that** said information comprises a link to said content, said link enabling access to said content.

10. The method according to claim 9, **characterized in that** content, to which a corresponding link has been stored, is flagged for conservation.
